# EUROPEAN PATENT APPLICATION

(11) **EP 1 748 055 A1**
(43) Date of publication of application: **31.01.2007**
(21) Application number: 05076681.5
(22) Date of filing: 20.07.2005
(51) Int. Cl.: C08L 23/10, C08L 23/02, E04D 5/04, E04D 5/06, E04D 5/10, C09J 123/10, C09J 123/02, C08K 5/00

(54) **Binder composition, and coloured roofing material comprising said binder composition**

(71) Applicant: Icopal Sas, 41170 Cormenon (FR)
(72) Inventor: Zandvoort, Frits, 9628 AH Siddeburen (NL)
(74) Representative: Winckels, Johannes Hubertus F.

(57) **Abstract**

The invention relates to a colourless binder composition and its use in waterproof roofing material, and to coloured roofing materials. Provided is a composition comprising a polyolefin-based polymer system comprising atactic and isotactic polyolefins; and an oil, optionally supplemented with a resin. Said polyolefin-based polymer system comprises for example atactic polypropylene (APP), isotactic polypropylene (IPP), thermoplastic olefin (TPO), Amorphous Poly-alpha-olefin (APAO), or a combination thereof. Also provided is a coloured waterproofing material, such as a roofing felt, a roofing membrane or a side membrane, comprising a composition according to the invention. The material may further comprise reinforcing means.

## Description

The invention relates to a colourless binder composition and its use in waterproof roofing material, and to coloured roofing materials.

Synthetic roofing and waterproofing materials, generally known as single-ply membranes, were introduced in Canada in the early sixties as an alternative to conventional built-up roofing (BUR). In recent years, they have become viable alternatives because of the rising cost of labour and petroleum-based bituminous materials, the improvement in polymeric materials, and the need for pliable and easily adaptable membranes for unusual roof configurations.

Synthetic roofing materials have desirable performance properties, including durability. Most of them are produced in sheet form. Others are produced for liquid application. They are made from different combinations of bitumens, polymers, fillers, plasticizers, stabilizers and other additives. A reinforcing scrim or mat of polyester or glass fibres is usually incorporated as well.

Prefabricated, modified bituminous membranes are widely used as waterproof roofing material. Although bitumen is a generic term applied to asphalt and coal tar pitch, most of the modified bituminous roofing materials are asphalt-based. Bitumen is thermoplastic and the temperature range over which the material remains viscoelastic is limited. Modifying the bitumen by adding polymers greatly extends this range. There are a number of polymeric modifiers that, in combination with bitumens and other ingredients, give the desired characteristics including weatherability. Commonly-used polymers are styrene butadiene styrene (SBS) and atactic polypropylene (APP).

A drawback of bituminous membranes is its colour; the intense black colour of the asphaltenes does not allow the colouration of roofing material in a desired colour. Since (brightly) coloured roofing membranes have become in fashion, this is a major limitation.

Synthetic bitumen-like binders have been described in the art (see e.g. EP179510 and JP2002-206047) which are essentially colourless and allow for the manufacture of coloured asphalt pavings, e.g. red bike lanes. However, the colourless binders described for paving purposes are unsuitable for roofing materials, which require a low temperature flexibility as well as a high temperature resistance. This issue has been addressed in EP1473327, which discloses a colourable composition for making a coloured roofing membrane. The composition of EP1473327 is based on hydrogenated petroleum resin and a mixture of thermoplastic copolymers, in particular (hydrogenated) styrenic block copolymers, like SBS and SEBS. The addition of a pigment to the disclosed composition allows for the manufacture of a roofing membrane in a desired colour.

It is an object of the present invention to provide a further colourable or essentially transparent binder composition that is suitably used in roofing and siding materials. In particular, it is an object to provide a coloured roofing material that displays a long-lasting colour stability and a sufficient hardness.

The objects set are achieved by the provision of a binder composition comprising:
a) a polyolefin-based polymer system comprising atactic and isotactic polyolefins; and b) an oil, optionally provided with a resin.

Polyolefins are polymers made from olefin monomers, such as polyethylene and polypropylene. The commercial manufacture of some polyolefins like polypropylene results in two chemical types or isoforms: atactic and isotactic polyolefin which isoforms have distinct properties. For example, atactic polypropylene (APP) is a soft, rubbery, amorphous polymer. It is a minor byproduct of isotactic polypropylene manufacture. APP is used both as a primary polymer and a modifier, such as a replacement for micro-crystalline wax, in commodity hot melt adhesives. In isotactic polypropylene (IPP), all methyl groups are positioned on the same side of the polymer chain; in atactic polypropylene, however, the methyl groups have a random distribution. The isotactic isomer is a tough, crystalline polymer widely used for a variety of mechanical applications.

The polyolefin-based polymer system in a colourless binding composition as disclosed herein confers a high resistance to ultraviolet (UV) radiation and thus protects a coloured roofing material against colour fading. The isotactic isomer provides for a sufficiently high melting point and degree of hardness of the roofing material wherein it is incorporated. Whereas the relative mass ratio of atactic and isotactic polyolefins in said polyolefin-based polymer system can vary, the isotactic isoform is the less abundant isoform. For instance, a polyolefin-based polymer system comprises 1-45% by weight of the isotactic form, preferably 5-30%, more preferably 10-25%, such as 40 parts by weight of atactic polymer and 10 parts by weight of isotactic polymer. The ratio was found to be strongly dependent of the flux of the vegetable oil used in a binding composition; the lesser the viscosity and stiffness of the oil, the higher the amount of isotactic polymer was required to achieve a composition with an acceptable hardness. However, too much isotactic polymer can result in brittleness of the composition. As a general rule of tumb, 1-15 parts of isotactic isoform for every 40 parts of atactic isoform will yield acceptable results.

Useful olefins in include APP, thermoplastic olefin (TPO), Amorphous Poly-alpha-olefin (APAO) and combinations thereof.

TPO is a general abbreviation for thermoplastic polyolefin.
Thermoplastic polyolefin generally describes that family of plastics made of polypropylene modified with an impact modifier. Common impact modifiers used are ethylene-propylene diene monomer (EPDM), plastomers, and low molecular weight polyolefin. The level of impact modifier may be as high as 40% in some TPOs that use EPDM or as low as 5%-8% using the other impact modifiers. The flexural modulus (stiffness) of TPOs varies widely and as a general rule obtaining paint adhesion to those with higher flexural modulus is more difficult.

Amorphous Poly-alpha-olefins (APAO) are produced by (co-) polymerisation of α-olefins (e.g. ethylene, propylene, 1-butene) with Ziegler-Natta catalysts. The (co-)polymers have an amorphous structure. They are used in the production of hot melts. Of particular interest are amorphous Poly-alpha-olefins sold under the tradename VESTOPLAST® by Degussa AG, for instance VESTOPLAST 888 The VESTOPLAST product group is a series of predominantly amorphous co- and terpolymers of ethylene, propylene and 1-butene. Impact-resistant polyolefins can also be obtained using metallocene catalysis, wherein the length and number of sidechains of the polyethylene polymer can be accurately determined. Thereby, polymers can be tailored and optimized for application in mind.

As with the atactic polymers, various types of isotactic olefin can be used. The isotactic olefin preferably has a melt index (MI) between around 8.. and 50. The melt index is a measure for viscosity; the higher the MI the lower the viscosity. With an MI below around 8, the isotactic olefin will not dissolve well enough in the bitumen, whereas an olefin with MI above 50 will hardly have any hardening effect. Preferably, the MI is in the range of 15-30. For example, in one aspect of the invention isotactic polypropylene with an MI of 20 is used.

Among plastic materials, polyolefins have an extremely low environmental impact. The processes that are used to produce them are considered to be among the cleanest and most efficient in the industry. At the end of their useful life polyolefins are inert products that lend themselves to a multitude of safe, efficient waste disposal processes, including recycling. Recycled polyolefins are suitably used in a colourless binding composition disclosed herein.
The second major component of a colourless binding composition is an oil, which oil may be a vegetable oil, a mineral oil or a combination thereof. The oil may be supplemented with a mineral or synthetic resin. The polyolefin-base polymer system and the oil, optionally provided with a resin, are present in said colourable composition in a relative ratio of 2:1 to 1:1 by weight]. Preferably, the ratio is about 1:1. For example, the binding composition comprises 50 parts of olefin polymers and 30 parts oil (ratio 1.66:1) or 50 parts of olefins and 30 parts of oil supplemented with 20 parts of resin (ratio 1:1).
A mineral oil refers to an oil which is derived from a mineral source, such as petroleum, as opposed to oils derived from plants and animals. An example of a suitable mineral oil is a naphtenic mineral oil.The invention preferably involves the use of a vegetable oil. As a vegetable oil is obtained from a renewable source, it is more environmentally friendly as compared to known colourless binders based on de-asphaltised bitumen, mineral oils in combination with petroleum resin, or mineral oils with bitumen. Vegetable oils are known in the art. The vegetable oil is for example rape seed oil, corn oil, sunflower oil or palm oil. Of particular interest is the use of a recycled vegetable oil, for instance waste frying oils
The resin which may be added to the oil to provide enhanced stability properties can be a synthetic or natural resin. The amount of resin which may be added to the oil can vary, depending on various factors like the type of resin and/or oil used and the desired properties of the roofing material in which the binding composition is to be incorporated. The amount of resin to be added will typically range from 0-70 parts by weight for every 50 parts of oil. In one embodiment, 20 parts by weight of resin is added to 30 parts by weight of oil.

In a preferred embodiment, the resin is a petroleum resin. Petroleum resin is a solid or liquid polymer polymerized in the by-products C5 and C9 distillates which are obtained in the course of cracking hydrocarbon into ethylene. According to the different material used, petroleum resins may be divided into aliphatic petroleum resin (C5 distillate polymer), aromatic petroleum resin (C9 distillate polymer), aliphatic and aromatic copolymer resin (copolymer of C5, C9 distillates) and alicyclic petroleum resin (aromatic petroleum hydrotreating resin). Preferably, a C5-resin is used in a colourless binding composition. C5 petroleum resin is commonly used in hot-melt adhesives, contact adhesives, road sign adhesives, paper sizing agent and so on.

A polyolefin-based binder composition can comprise at least one additive selected from the group consisting of a pigment, a filler, an antioxidant, a ultraviolet (UV)- light absorber, light stabilizer and a flame retardant.

Suitable pigments include red, grey, blue, green or white pigments, like titanium dioxide (TiO₂), ground or powdered slate, natural and synthetic iron oxide powders, chromium oxide, natural pigments derived from earth or rock, and the like.

Exemplary fillers include limestone and ground or powdered slate. As will be understood, the colour of the filler material has to be compatible with the desired colour of the end product. Also, the filler material may serve both as filler and pigment, For example, in case a white or light colour is desired, fillers such as silica, clay, talc and carbonates can be used, optionally supplemented with a pigment, e.g. titanium dioxide as a whitening pigment. Likewise, ground or powdered slate can serve both as filler and grey pigment.

Useful antioxidants for incorporation in a binder composition are hindered phenolic antioxidants, sulphur-containing antioxidants and phosphorus-containing antioxidants.

UV absorbers (UVAs) act by shielding the polymer from ultraviolet light. They are since long time well known as stabilizers of transparent or translucent plastics to protect the bulk of thick applications. Colour fading of full shade or tint coloured polymeric products with (organic) pigments can be significantly prolonged by the use of UV absorbers. Suitable UV absorbers include benzophenone, benzotriazole and hydroxyphenyl triazine.

Light stabilizers act by scavenging the radical intermediates formed in the photo-oxidation process. Hindered Amine Light Stabilizers (HALS) are extremely efficient stabilizers against light-induced degradation of most polymers. They do not absorb UV radiation, but act to inhibit degradation of the polymer, thus extending its durability. Significant levels of stabilization are achieved at relatively low concentrations. HALS' high efficiency and longevity are due to a cyclic process wherein the HALS are regenerated rather than consumed during the stabilization process. They also protect polymers from thermal degradation and can be used as thermal stabilizer.

A composition may further comprise a flame retardant, which are known in the art. Flame retardants can act in a variety of ways: by raising the ignition temperature, reducing the rate of burning, reducing flame spread and reducing smoke generation. Examples include borate compounds, like zinc borate or the mineral colemanite, which is a hydrous calcium borate.

In a further aspect, the invention relates to a waterproofing material comprising the composition according to the invention. The waterproofing material can be of any type. It is for example a roofing felt, a roofing membrane or sheet or a side membrane. A roofing membrane is a flexible or semi-rigid roof covering or waterproofing layer with the primary function of the exclusion of water. In particular, the invention provides a waterproof membrane in a non-black colour which has a long colour stability and satisfies the temperature criteria set for roofing material, i.e. low temperature flexibility and high temperature resistance.

A specific aspect of the invention relates to a deformable waterproofing (roofing) material comprising a binder composition comprising a polyolefin-based polymer system and a vegetable oil, further comprising reinforcing means to give it the mechanical properties it needs. Such deformable materials are frequently used to provide water- and snow proof sealing between roof penetrating building structures, especially roof windows, and the surrounding roofing which may consist of tiles or other forms of corrugated covering materials. The means for reinforcing can be selected from the group consisting of organic, inorganic and metal fibres, including fibreglass and polyester. The means for reinforcement can be woven, non-woven, stitched, welded or glued. In a preferred embodiment, the means for reinforcement is a metal layer that is gauze-shaped, for example as disclosed in patent application WO 2004/083555. This allows giving the material properties which are similar to lead slabs. Herewith, the invention provides a lead-replacing waterproof membrane. The lead-replacing membrane can be coloured in a desired colour (due to the transparency of the binder composition) and which is durable and has a high colour stability. WO 2004/083555 mentions that a lead-replacing cover material may be provided with a coloured foil. Such a coloured foil may erode and decay over time, thereby reducing the colour stability of the lead-substitute. In contrast, a coloured membrane provided herein is pigmented throughout the whole membrane since it comprises a pigmented binder composition. This significantly increases the colour stability.
It is for instance a membrane to be used as waterproof sealing material to cover the transitional space between a roof window (skylight) and tiles. The colourable composition allows adjusting the colour of the membrane to that of the tiles and/or bricks of the building. In is for instance a slate grey or brick-red waterproof membrane with the properties of a lead slab. As is common practice, the skylight can be pre-fabricated with a reinforced (coloured) membrane.

Depending on the components used, a binder composition of the invention can be sticky, and therewith also the end products in which it is incorporated. The surface of a waterproof material of the invention can be treated to reduce its stickiness such that it can be more easily handled. To that end, the surface of said material is provided with an anti-adhesive layer. As will be understood, the anti-adhesive layer preferably does not optically cover or mask the coloured material. Preferably, it is a thin transparent foil, fine powder or a hard wax. The wax can be applied to the surface of the material in the form of an emulsion, a powder or from a molten (liquid) state. The durability of the ant-adhesive layer can vary. Generally speaking, it is most important that it is functional in reducing the stickiness of the material during the process of installation or application of the membrane, e.g. when roofing a building. When the anti-adhesive layer disappears after some time, the membrane will have lost its first stickiness.
In a specific embodiment, the anti-adhesive properties are conferred to the material by using an acrylic emulsion that is applied to the surface of the material.

### EXAMPLE

The invention is illustrated by the non-limiting example below. All parts indicated are parts by weight.

Components of composition:
40 parts Vestoplast 888 (APAO)
10 parts IPP (isotactic PP with MI 20)
10 parts rape seed oil
20 parts of a heavy naphtenic mineral oil
20 parts C5-resin
25 parts colemanite (flame retardant)
45 parts powdered slate (grey pigment/filler)

The properties of this composition were as follows:
- The initial grey colour was monitored during ageing for a prolonged period of time and remained unchanged.
- Penetration at 25 °C of 30 dmm (0.1 mm)
- Softening point (Ring and Ball) of 159 °C
- Cold flexibility lower than -25 °C
- The binder showed good properties within a very wide temperature range which can be expected in roofings and claddings. As an example, this material can be reinforced and used as a membrane, even on a vertical slope in full sunlight.

## Claims

1. A binding composition comprising:
a) a polyolefin-based polymer system comprising atactic and isotactic polyolefins; and
b) an oil, optionally supplemented with a resin.

2. Composition according to claim 1, wherein said polyolefin-based polymer system comprises atactic polypropylene (APP), isotactic polypropylene (IPP), thermoplastic olefin (TPO), Amorphous Poly-alpha-olefin (APAO), or a combination thereof.

3. Composition according to claim 1 or 2, wherein the isotactic polyolefins are present in said polyolefin-based polymer system in a weight ratio between 1% and 45% relative to the atactic polyolefins.

4. Composition according to any one of claims 1 to 3, wherein the composition comprises recycled polyolefins.

5. Composition according to any one of claims 1 to 4, wherein said oil is a mineral oil, a vegetable oil or a combination thereof.

6. Composition according to claim 5, wherein said vegetable oil is selected from the group consisting of rape seed oil, sunflower oil, corn oil, palm oil and a waste frying oil, or a combination thereof.

7. Composition according to any one of claims 1 to 6, wherein the resin is a synthetic or natural resin.

8. Composition according to claim 7, wherein the resin is a hydrogenated petroleum resin, preferably a C5-resin.

9. Composition according to any one of claims 1 to 8, wherein the polyolefin-based polymer system and the oil, optionally provided with a resin, are present in said composition in a ratio of 2:1 to 1:1.

10. Composition according to any one of claims 1 to 9, further comprising at least one component selected from the group consisting of a pigment, a filler, an antioxidant, a ultraviolet (UV)- light absorber, a light stabilizer and a flame retardant.

11. A waterproofing material comprising the composition according to any one of claims 1 to 10.

12. Material according to claim 11, wherein the material is a roofing felt, a roofing membrane or a side membrane.

13. Material according to claim 11 or 12, further comprising reinforcing means.

14. Material according to claim 13, wherein said reinforcing means for is selected from the group consisting of organic, inorganic and metal fibres.

15. Material according to claim 13 or 14, wherein said means for reinforcement is woven, non-woven, stitched, welded or glued.

16. Material according to any one of claims 11-15, wherein the surface of said material is provided with an anti-adhesive layer.

17. Material according to claim 16, wherein said anti-adhesive layer is a thin transparent foil, fine powder or a hard wax.

18. Material according to claim 16 or 17, wherein said anti-adhesive layer is an acrylic emulsion

19. Use of a composition according to any one of claims 1 to 10 for the manufacture of a waterproof covering material, preferably a roofing material.
